# EUROPEAN PATENT APPLICATION

(11) **EP 3 951 443 A1**
(43) Date of publication of application: **09.02.2022**
(21) Application number: 20783400.3
(22) Date of filing: 27.03.2020
(51) Int. Cl.: G02B 1/04, C08G 18/08

(54) **METHOD FOR PRODUCING OPTICAL MATERIAL, AND POLYMERIZABLE COMPOSITION FOR OPTICAL MATERIAL**

(30) Priority: 29.03.2019 JP 2019066203
(71) Applicant: Mitsui Chemicals, Inc., Tokyo 105-7122 (JP)
(72) Inventor: KAWAGUCHI, Masaru, Omuta-shi, Fukuoka 836-8610 (JP); ITO, Shinsuke, Omuta-shi, Fukuoka 836-8610 (JP)
(74) Representative: Mewburn Ellis LLP
(86) International application number: PCT/JP2020/014270
(87) International publication number: WO 2020/203869

(57) **Abstract**

The method of producing an optical material of the present disclosure includes a step of mixing a resin monomer for an optical material and an additive to prepare a polymerizable composition for an optical material having a hue specified by L^{∗} of 70 or more b^{∗} of from -30 to 10 in the CIE 1976 (L^{∗}, a^{∗}, b^{∗}) color space when measured at a thickness of 10 mm, and a step of polymerizing and curing the polymerizable composition for an optical material.

## Description

### Technical Field

The present disclosure relates to a method of producing an optical material and to a polymerizable composition for an optical material.

### Background Art

Plastic lenses are lighter and less likely to crack in comparison with inorganic lenses and can be dyed. Thus, in recent years, plastic lenses have rapidly become widespread in optical materials such as spectacle lenses and camera lenses.

The resin that constitutes a lens for use for an optical material is required not to be tinted very much and is required to be transparent due to its use.

Patent Document 1 discloses a method of producing a sulfur-containing monomer for optical materials having a preferable hue by adjusting the hue of a raw material.

Patent Document 1: Japanese Patent Application Laid-Open (JP-A) No. 2006-284920

### SUMMARY OF INVENTION

### Technical Problem

Resins for optical materials are commonly prepared by mixing a monomer with an additive such as an ultraviolet absorber or a hue adjuster to prepare a polymerizable composition, and then polymerizing and curing the composition. However, since the hue of the polymerizable composition for optical materials may change due to the influence of additives and the like, a resin for optical materials having a desired hue cannot be produced in some cases.

Patent Document 1 does not disclose the influence of additives such as an ultraviolet absorber and a hue adjuster on the hue of a monomer or a polymerizable composition, and does not disclose the change in hue during the polymerization curing process.

### Solution to Problem

As a result of intensive studies, the present inventors have found a correlation between the hue of a polymerizable composition for an optical material before polymerization curing and the hue of the resin for optical materials after polymerization curing, and have completed a method for obtaining a resin for optical materials having a good hue and a polymerizable composition for an optical material adjusted to a prescribed hue.

That is, the disclosure can be described below.
<1> A method of producing an optical material, the method comprising:
   mixing a resin monomer for an optical material with an additive to prepare a polymerizable composition for an optical material having a hue for which L^{∗} is 70 or more and b^{∗} is from -30 to 10 in a CIE 1976 (L^{∗}, a^{∗}, b^{∗}) color space in a case in which the polymerizable composition for an optical material is measured at a thickness of 10 mm; and
   polymerizing and curing the polymerizable composition for an optical material to obtain a cured product having a hue for which L^{∗} is 70 or more and b^{∗} is from -30 to 10 in the CIE 1976 (L^{∗}, a^{∗}, b^{∗}) color space in a case in which the cured product is measured at a thickness of 10 mm.
<2> A method of producing an optical material, the method comprising:
   mixing a resin monomer for an optical material with an additive to prepare a polymerizable composition for an optical material having a hue for which YI is from -70 to 20; and
   polymerizing and curing the polymerizable composition for an optical material to obtain a cured product having a hue for which YI is from -70 to 20.
<3> The method of producing an optical material according to <2>, wherein the polymerizable composition for an optical material has a hue for which L^{∗} is 70 or more and b^{∗} is from -30 to 10 in a CIE 1976 (L^{∗}, a^{∗}, b^{∗}) color space in a case in which the polymerizable composition for an optical material is measured at a thickness of 10 mm, and
   the cured product has a hue for which L^{∗} is 70 or more and b^{∗} is from -30 to 10 in the CIE 1976 (L^{∗}, a^{∗}, b^{∗}) color space in a case in which the cured product is measured at a thickness of 10 mm.
<4> The method of producing an optical material according to any one of <1> to <3>, wherein:
   the additive includes an ultraviolet absorber and a hue adjuster, and
   the preparing the polymerizable composition for an optical material comprises adjusting a hue of the polymerizable composition for an optical material with the hue adjuster.
<5> The method of producing an optical material according to <4>, wherein the ultraviolet absorber comprises a benzotriazole compound represented by the following Formula (1): 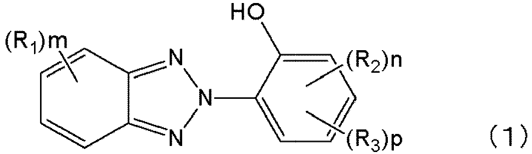 wherein, in Formula (1), each R₁ and each R₂ independently represents an alkyl group having 1 to 8 carbon atoms or a halogen atom, m represents an integer from 0 to 3, n represents an integer from 0 to 3, p represents an integer from 0 to 1, and each R₃ independently represents a functional group having 2 to 15 carbon atoms including an ester bond.
<6> The method of producing an optical material according to <5>, wherein the benzotriazole compound is at least one selected from the group consisting of 2-(3-tert-butyl-2-hydroxy-5-methylphenyl)-5-chloro-2H-benzotriazole, 2-(2-hydroxy-5-tert-octylphenyl)benzotriazole, 2-(2-hydroxy-5-tert-butylphenyl)benzotriazole, 2-(5-octylpropionate-2-hydroxyphenyl)-5-chloro-2H-benzotriazole, 2-(3-tert-butyl-5-octylpropionate-2-hydroxyphenyl)-5chloro-2H-benzotriazole, 2-(3-tert-butyl-2-hydroxy-5-ethylphenyl)-5-chloro-2H-benzotriazole, 2-(4-ethoxy-2-hydroxyphenyl)-5-chloro-2H-benzotriazole, and 2-(4-butoxy-2-hydroxyphenyl)-5-chloro-2H-benzotriazole.
<7> The method of producing an optical material according to any one of <4> to <6>, wherein the hue adjuster is a bluing agent.
<8> The method of producing an optical material according to any one of <1> to <7>, wherein the resin monomer for an optical material comprises at least one selected from the group consisting of:
   a combination of an isocyanate compound (A) and at least one active hydrogen compound (B) selected from the group consisting of polythiol compounds having two or more mercapto groups, hydroxythiol compounds having one or more mercapto groups and one or more hydroxyl groups, polyol compounds having two or more hydroxyl groups, and amine compounds,
   an episulfide compound (C), and
   a combination of an episulfide compound (C) and a polythiol compound.
<9> The method of producing an optical material according to <8>, wherein the isocyanate compound (A) comprises at least one selected from the group consisting of an aliphatic isocyanate compound, an alicyclic isocyanate compound, an aromatic isocyanate compound, a heterocyclic isocyanate compound, and an araliphatic isocyanate compound.
<10> The method of producing an optical material according to <9>, wherein the isocyanate compound (A) comprises at least one selected from the group consisting of xylylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, bis(isocyanatocyclohexyl)methane, hexamethylene diisocyanate, pentamethylene diisocyanate, and isophorone isocyanate.
<11> The method of producing an optical material according to <8>, wherein the polythiol compound comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).
<12> The method of producing an optical material according to <8>, wherein the episulfide compound (C) is at least one selected from the group consisting of bis(2,3-epithiopropyl)sulfide, bis(2,3-epithiopropyl)disulfide, bis(1,2-epithioethyl)sulfide, bis(1,2-epithioethyl)disulfide, and bis(2,3-epithiopropylthio)methane.
<13> The method of producing an optical material according to any one of <1> to <12>, wherein the polymerizable composition for an optical material has a hue for which L^{∗} is 70 or more and b^{∗} is from -30 to 5 in the CIE 1976 (L^{∗}, a^{∗}, b^{∗}) color space in a case in which the polymerizable composition for an optical material is measured at a thickness of 10 mm.
<14> The method of producing an optical material according to any one of <1> to <13>, wherein the cured product has a hue for which L^{∗} is 70 or more and b^{∗} is from -25 to 10 in the CIE 1976 (L^{∗}, a^{∗}, b^{∗}) color space in a case in which the cured product is measured at a thickness of 10 mm.
<15> A polymerizable composition for an optical material, comprising a resin monomer for an optical material and an additive, wherein the polymerizable composition has a hue for which L^{∗} is 70 or more and b^{∗} is from -30 to 10 in a CIE 1976 (L^{∗}, a^{∗}, b^{∗}) color space.
<16> A polymerizable composition for an optical material, comprising a resin monomer for an optical material and an additive, wherein, in the polymerizable composition, a value of YI is from -70 to 20.
<17> The polymerizable composition for an optical material according to <16>, wherein L^{∗} is 70 or more and b^{∗} is from -30 to 10 in a CIE 1976 (L^{∗}, a^{∗}, b^{∗}) color space.
<18> The polymerizable composition for an optical material according to any one of <15> to <17>, wherein the additive comprises an ultraviolet absorber and a hue adjuster.
<19> The polymerizable composition for an optical material according to <18>, wherein the ultraviolet absorber comprises a benzotriazole compound represented by the following Formula (1): 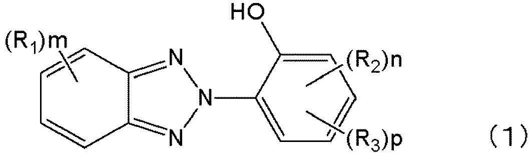 wherein, in Formula (1), each R₁ and each R₂ independently represents an alkyl group having 1 to 8 carbon atoms or a halogen atom, m represents an integer from 0 to 3, n represents an integer from 0 to 3, p represents an integer from 0 to 1, and each R₃ independently represents a functional group having 2 to 15 carbon atoms including an ester bond.
<20> The polymerizable composition for an optical material according to <19>, wherein the benzotriazole compound is at least one selected from the group consisting of 2-(3-tert-butyl-2 hydroxy-5-methylphenyl)-5-chloro-2H-benzotriazole, 2-(2-hydroxy-5-tert-octylphenyl)benzotriazole, 2-(2-hydroxy-5-tert-butylphenyl)benzotriazole, 2-(5-octylpropionate-2-hydroxyphenyl)-5-chloro-2H-benzotriazole, 2-(3-tert-butyl-5-octylpropionate-2-hydroxyphenyl)-5-chloro-2H-benzotriazole, 2-(3-tert-butyl-2-hydroxy-5-ethylphenyl)-5-chloro-2H-benzotriazole, 2-(4-ethoxy-2-hydroxyphenyl)-5-chloro-2H-benzotriazole, and 2-(4-butoxy-2-hydroxyphenyl)-5-chloro-2H-benzotriazole.
<21> The polymerizable composition for an optical material according to any one of <18> to <20>, wherein the hue adjuster is a bluing agent.
<22> The polymerizable composition for an optical material according to any one of <15> to <21>, wherein the resin monomer for an optical material comprises:
   an isocyanate compound (A); and
   at least one active hydrogen compound (B) selected from the group consisting of polythiol compounds having two or more mercapto groups, hydroxythiol compounds having one or more mercapto groups and one or more hydroxyl groups, polyol compounds having two or more hydroxyl groups, and amine compounds.
<23> The polymerizable composition for an optical material according to <22>, wherein the isocyanate compound (A) comprises at least one selected from the group consisting of an aliphatic isocyanate compound, an alicyclic isocyanate compound, an aromatic isocyanate compound, a heterocyclic isocyanate compound, and an araliphatic isocyanate compound.
<24> The polymerizable composition for an optical material according to <22> or <23>, wherein the isocyanate compound (A) comprises at least one selected from the group consisting of xylylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, bis(isocyanatocyclohexyl)methane, hexamethylene diisocyanate, pentamethylene diisocyanate, and isophorone isocyanate.
<25> The polymerizable composition for an optical material according to <22>, wherein the polythiol compound comprises at least one selected from the group consisting of 5,7-dimercaptomethyl-1, 11-dimercapto-3,6,9-trithiaundecane, 4,7-dimercaptomethyl-1, 11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).
<26> The polymerizable composition for an optical material according to any one of <15> to <25>, wherein the polymerizable composition has a hue for which L^{∗} is 70 or more and b^{∗} is from -30 to 5 in the CIE 1976 (L^{∗}, a^{∗}, b^{∗}) color space in a case in which the polymerizable composition for an optical material is measured at a thickness of 10 mm.

The hue of the polymerizable composition for an optical material in the disclosure means the hue before the polymerizable composition for an optical material is polymerized and cured.

### Advantageous Effects of Invention

According to the production method of the disclosure, an optical material having a good hue can be obtained by using a polymerizable composition for an optical material having a desired hue.

### DESCRIPTION OF EMBODIMENTS

In the disclosure, any numerical range described using "to" refers to a range in which numerical values described before and after the "to" are included as the lower limit value and the upper limit value of the range.

In the disclosure, the amount of each component in a composition means, when there is a plurality of substances corresponding to each component in the composition, the total amount of the plurality of substances present in the composition, unless otherwise specified.

With respect to numerical ranges stated hierarchically in the disclosure, the upper limit or the lower limit of a numerical range of a hierarchical level may be replaced with the upper limit or the lower limit of a numerical range of another hierarchical level. In addition, with respect to a numerical range stated in the description, the upper limit or the lower limit of the numerical range may be replaced with a relevant value shown in any of Examples.

Hereinafter, the method of producing an optical material of the disclosure will be specifically described with reference to a first embodiment and a second embodiment.

### <First Embodiment

The method of producing an optical material of the present embodiment comprises the following steps.

Step 1: mixing a resin monomer for an optical material and an additive to prepare a polymerizable composition for an optical material having a hue specified by L^{∗} of 70 or more and b^{∗} of from -30 to 10 in the CIE 1976 (L^{∗}, a^{∗}, b^{∗}) color space when measured at a thickness of 10 mm.

Step 2: polymerizing and curing the polymerizable composition for an optical material to obtain a cured product having a hue specified by L^{∗} of 70 or more and b^{∗} of from -30 to 10 in the CIE 1976 (L^{∗}, a^{∗}, b^{∗}) color space when measured at a thickness of 10 mm.

By controlling the hue of the polymerizable composition for an optical material, an optical material having a good hue can be obtained.

### (Step 1)

In this step, from the viewpoint of the effect in the disclosure, the polymerizable composition for an optical material has L^{∗} of 70 or more, preferably L^{∗} of 75 or more, and more preferably L^{∗} of 80 or more in the CIE 1976 (L^{∗}, a^{∗}, b^{∗}) color space when measured at a thickness of 10 mm.

In this step, from the viewpoint of the effects in the disclosure, the polymerizable composition for an optical material has a hue specified by b^{∗} of from -30 to 10, preferably b^{∗} of from -30 to 5, more preferably b^{∗} of from -27 to 3, and still more preferably b^{∗} of from -10 to 1 in the CIE 1976 (L^{∗}, a^{∗}, b^{∗}) color space when measured at a thickness of 10 mm.

In order to obtain a polymerizable composition for an optical material having the above-mentioned hue, this step preferably includes a step of mixing a resin monomer for an optical material and an additive to adjust the hue.

### [Additive]

The additive is not particularly limited as long as it dispersible or soluble in the resin for constituting a lens, and conventionally known resin additives can be used.

Examples of the additive in the embodiment include a polymerization catalyst, an internal mold release agent, an ultraviolet absorber, a chain extender, a crosslinking agent, a light stabilizer, an antioxidant, an oil soluble dye, a filler, and an adhesion improver, which may be used with appropriate selection as necessary.

In the embodiment, it is preferable to use an ultraviolet absorber or the like as the additive from the viewpoint of suppressing the coloring of the resin by ultraviolet rays and further to use a hue adjuster in order to suppress the hue change of the resin due to the addition of an ultraviolet absorber or the like.

The ultraviolet absorber (a) can be used in such an amount that the coloring of the resin is suppressed, and the hue adjuster (b) can be used such that the hue of the resin changed by the addition of the ultraviolet absorber (a) is adjusted to be the hue mentioned above.

The range of the weight ratio (b/a) of the hue adjuster (b) to the ultraviolet absorber (a) contained in the polymerizable composition for an optical material varies depending on the resin that constitutes a lens, the hue adjuster (a) and the ultraviolet absorber (b), and the weight ratio may be adjusted to be from 30 to 50,000, preferably from 70 to 40,000, and more preferably from 100 to 30,000.

### [Ultraviolet Absorber (a)]

The ultraviolet absorber (a) may be used with selection from among conventionally known ultraviolet absorbers as long as the effects in the disclosure can be exhibited. The ultraviolet absorber (a) may comprise, for example, a benzophenone-based ultraviolet absorber, a triazine-based ultraviolet absorber, or a benzotriazole-based ultraviolet absorber, and preferably comprises a benzotriazole-based ultraviolet absorber.

As the benzotriazole-based ultraviolet absorber, a benzotriazole compound represented by the following Formula (1) is preferably contained from the viewpoint of the effects in the disclosure.

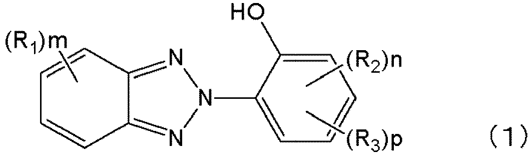

In Formula (1), m R₁s and n R₂s each independently represent an alkyl group having 1 to 8 carbon atoms or a halogen atom. m represents an integer from 0 to 3, n represents an integer from 0 to 3, p represents an integer from 0 to 1, and p R₃s each independently represent a functional group having 2 to 15 carbon atoms including an ester bond.

Examples of the benzotriazole compound represented by Formula (1) include 2-(3-tert-butyl-2-hydroxy-5-methylphenyl)-5-chloro-2H-benzotriazole, 2-(2-hydroxy-5-tert-octylphenyl)benzotriazole, 2-(2-hydroxy-5-tert-butylphenyl)benzotriazole, 2-(5-octylpropionate-2-hydroxyphenyl)-5-chloro-2H-benzotriazole, 2-(5-methylpropionate-2-hydroxyphenyl)-5-chloro-2H-benzotriazole, 2-(3-tert-butyl-5-octylpropionate-2-hydroxyphenyl)-5-chloro-2H-benzotriazole, 2-(3-tert-butyl-2-hydroxy-5-ethylphenyl)-5-chloro-2H-benzotriazole, 2-(4-ethoxy-2-hydroxyphenyl)-5-chloro-2H-benzotriazole, 2-(4-butoxy-2-hydroxyphenyl)-5-chloro-2H-benzotriazole, 2-(2-hydroxy-5-tert-butylphenyl)benzotriazole, 2-(2-hydroxy-5-methylphenyl)benzotriazole, 2- (5-tert-octyl-3-(phenylpropan-2-yl)-2-hydroxyphenyl)benzotriazole, 2-(5-tert-butyl-3-(phenylpropan-2-yl)-2-hydroxyphenyl)benzotriazole, 2-(5-methyl-3-(phenylpropan-2-yl)-2-hydroxyphenyl)benzotriazole, 2-(5-octylpropionate-2-hydroxyphenyl)benzotriazole, 2-(5-tert-octyl-2-hydroxyphenyl)benzotriazole, 2-(3,5-di-tert-butyl-2-hydroxyphenyl)benzotriazole, 2-(3,5-di-tert-pentyl-2-hydroxyphenyl)benzotriazole, 2-(3,5-bis-(phenylpropan-2-yl)-2-hydroxyphenyl) benzotriazole, 2-(3,5-di-tert-butyl-2-hydroxyphenyl)-5-chloro-2H-benzotriazole, 2-(4-octyloxy-2-hydroxyphenyl)benzotriazole, 2-(5-methyl-3-n-dodecyl-2-hydroxyphenyl)benzotriazole, 2-(5-methyl-2-hydroxyphenyl)benzotriazole, and 2-(5-tert-butyl-2-hydroxyphenyl)benzotriazole, etc., and at least one species selected from the group consisting of these may be used.

The benzotriazole compound is preferably at least one species selected from the group consisting of 2-(3-tert-butyl-2-hydroxy-5-methylphenyl)-5-chloro-2H-benzotriazole, 2-(2-hydroxy-5-tert-octylphenyl)benzotriazole, 2-(3-tert-butyl-2-hydroxy-5-ethylphenyl)-5-chloro-2H-benzotriazole, 2-(4-ethoxy-2-hydroxyphenyl)-5-chloro-2H-benzotriazole, 2-(4-butoxy-2-hydroxyphenyl)-5-chloro-2H-benzotriazole, 2-(2-hydroxy-5-tert-butylphenyl)benzotriazole, 2-(5-octylpropionate-2-hydroxyphenyl)-5-chloro-2H-benzotriazole, and 2-(3-tert-butyl-5-octylpropionate-2-hydroxyphenyl)-5-chloro-2H-benzotriazole.

### [Hue Adjuster (b)]

The hue adjuster (b) may be used with selection from among conventionally known hue adjusters as long as the effects in the disclosure can be exhibited.

Examples of the hue adjuster include anthraquinone-based dyes, perinone-based dyes, monoazo-based dyes, diazo-based dyes, and phthalocyanine-based dyes. The hue adjuster may be used singly, or in combination of two or more kinds thereof.

Examples of the anthraquinone-based dye include Solvent Blue 36 (1,4-bis(isopropylamino)anthracene-9,10-dione), Solvent Blue 63 (1-(methylamino)-4-(m-tolylamino)anthracene-9,10-dione), Solvent Blue 94 (1-amino-2-bromo-4-(phenylamino)anthracene-9,10-dione), Solvent Blue 97 (1,4-bis((2,6-diethyl-4-methylphenyl)amino)anthracene-9,10-dione), Solvent Blue 104 (1,4-bis(mesitylamino)anthracene-9,10-dione), Solvent Violet 13 (1-hydroxy-4-(p-tolylamino)anthracene-9,10-dione), Solvent Green 3 (1,4-bis(p-tolylamino)anthracene -9,10-dione), Solvent Red 52 (3-methyl-6-(p-tolylamino)-3H-naphtho[1,2,3-de]quinoline-2,7-dione), Solvent Red 168 or Plast Red 8320 (1-(cyclohexylamino)anthracene-9,10-dione), Solvent Red 207 (1,5-bis(cyclohexylamino)anthracene-9,10-dione), Disperse Red 22 (1-(phenylamino)anthracene-9,10-dione), Disperse Red 60 (1-amino-4-hydroxy-2-phenoxyanthracene-9,10-dione), Solvent Violet 59 (1,4-diamino-2,3-diphenylanthracene-9,10-dione), Solvent Green 28 (1,4-bis((4-butylphenyl)amino)-5,8-dihydroxyanthracene-9,10-dione), and Plast Blue 8514 (1-hydroxy-4-[(4-methylphenyl)amino]-9,10-anthracenedione).

Among the above, Solvent Blue 36, Solvent Blue 94, Plast Red 8320, and Plast Blue 8514 are preferable as the anthraquinone-based dye.

Examples of the perinone-based dye include Solvent Orange 60 (12H-isoindolo[2,1-a]perimidin-12-one), Solvent Orange 78, Solvent Orange 90, Solvent Red 135 (8,9,10,11-tetrachloro-12H-isoindolo[2,1-a]perimidin-12-one), Solvent Red 162, and Solvent Red 179 (14H-benzo[4,5]isoquinolino[2,1-a]perimidin-14-one).

Examples of the monoazo-based dye include Solvent Red 195, Fast Orange R, Oil Red, and Oil Yellow.

Examples of the diazo-based dye include Chicago Sky Blue 6B (sodium 6,6'-((1E,1'E)-(3,3'-dimethoxy-[1,1'-biphenyl]-4,4'-diyl)bis(diazene-2,1-diyl))bis(4-amino-5-hydroxynaphthalene-1,3-disulfonate)), Evans Blue (sodium 6,6'- ((1E,1'E)-(3,3'-dimethyl-[1,1'-biphenyl]-4,4'-diyl)bis(diazene-2,1-diyl))bis(4-amino-5-hydroxynaphthalene-1,3-disulfonate)), Direct Blue 15 (sodium 3,3'-((1E,1'E)-(3,3'-dimethoxy-[1,1'-biphenyl]-4,4'-diyl)bis(diazene-2,1-diyl))bis(5-amino-4-hydroxynaphthalene-2,7-disulfonate)), Trypan Blue (sodium 3,3'-((1E,1'E)-(3,3'-dimethyl-[1,1'-biphenyl]-4,4'-diyl)bis(diazene-2,1-diyl))bis(5-amino-4-hydroxynaphthalene-2,7-disulfonate)), Benzopurpurin 4B (sodium 3,3'-((1E,1'E)-(3,3'-dimethyl-[1,1'-biphenyl]-4,4'-diyl)bis(diazene-2,1-diyl))bis(4-aminonaphthalene-1-sulfonate)), and Congo Red (sodium 3,3'-((1E,1'E)-[1,1'-biphenyl]-4,4'-diylbis(diazene-2,1-diyl))bis(4-aminonaphthalene-1-sulfonate)).

Examples of the phthalocyanine-based dye include C.I. Direct Blue 86 and C.I. Direct Blue 199.

From the viewpoint of the effects of the disclosure, the hue adjuster (b) preferably comprises at least one species selected from the group consisting of Solvent Blue 36, Solvent Blue 94, Solvent Blue 97, Solvent Blue 104, Solvent Violet 59, Solvent Red 195, Disperse Red 60, Solvent Green 28, Solvent Orange 60, Plast Red 8320, and Plast Blue 8514, and
more preferable comprise at least one species selected from the group consisting of Solvent Blue 36, Solvent Blue 94, Plast Red 8320, and Plast Blue 8514. The hue adjusters (b) listed above may be used singly, or in combination of two or more kinds thereof.

In the embodiment, among these, a bluing agent is preferably used as the hue adjuster. The bluing agent has an absorption band in a wavelength range from orange to yellow in the visible light region and has a function of adjusting the hue of an optical material made of resin.

Examples of the bluing agent include Plast Blue 8514, Solvent Blue 36, Solvent Blue 94, Solvent Blue 97, Solvent Blue 104, Plast Red 8320, Solvent Red 207, Disperse Red 22, and Disperse Red 60.

From the viewpoint of the effects of the disclosure, the bluing agent preferably comprises at least one species selected from the group consisting of Plast Blue 8514, Solvent Blue 36, Solvent Blue 94, Solvent Blue 97, Solvent Blue 104, Plast Red 8320, and Disperse Red 22, and more preferably comprises at least one species selected from the group consisting of

Plast Blue 8514, Solvent Blue 94, Solvent Blue 36, and Plast Red 8320. The bluing agents listed above may be used singly, or in combination of two or more kinds thereof.

### [Resin Monomer for Optical Material]

In the embodiment, the resin monomer for an optical material may be used with selection from among conventionally known resin monomers used for optical materials as long as the effects of the disclosure can be exhibited.

In the embodiment, the resin monomer for an optical material preferably comprises at least one member selected from the group consisting of:
a combination of an isocyanate compound (A) and
at least one active hydrogen compound (B) selected from the group consisting of polythiol compounds having two or more mercapto groups, hydroxythiol compounds having one or more mercapto groups and one or more hydroxyl groups, polyol compounds having two or more hydroxyl groups, and amine compounds, an episulfide compound (C), and a combination of an episulfide compound (C) and a polythiol compound.

A resin obtained from these resin monomers is preferable because it is superior in transparency.

### (Isocyanate Compound (A))

Examples of the isocyanate compound (A) include aliphatic isocyanate compounds, alicyclic isocyanate compounds, aromatic isocyanate compounds, heterocyclic isocyanate compounds, and araliphatic isocyanate compounds. The isocyanate compound (A) is used singly, or in mixture of two or more kinds thereof. These isocyanate compounds may include dimers, trimers, and prepolymers.

Examples of these isocyanate compounds include the compounds disclosed as examples in WO 2011/055540.

In the embodiment, from the viewpoint of the effects of the disclosure, the isocyanate compound (A) preferably comprises at least one compound selected from the group consisting of xylylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, bis(isocyanatocyclohexyl)methane, hexamethylene diisocyanate, pentamethylene diisocyanate, and isophorone isocyanate, and more preferably comprises at least one compound selected from the group consisting of xylylene diisocyanate, tolylene diisocyanate, 2,5-bis(isocyanatomethyl)bicyclo-[2.2.1]-heptane, 2,6-bis(isocyanatomethyl)bicyclo-[2.2.1] -heptane, bis(isocyanatocyclohexyl)methane, hexamethylene diisocyanate, and pentamethylene diisocyanate.

### (Active Hydrogen Compound (B))

In the embodiment, as the active hydrogen compound (B), at least one compound selected from the group consisting of polythiol compounds having two or more mercapto groups, hydroxythiol compounds having one or more mercapto groups and one or more hydroxyl groups, polyol compounds having two or more hydroxyl groups, and amine compounds may be used.

Examples of these active hydrogen compounds include the compounds disclosed as examples in WO 2016/125736.

From the viewpoint of the effects in the disclosure, the active hydrogen compound (B) is preferably at least one compound selected from among polythiol compounds having two or more mercapto groups and hydroxythiol compounds having one or more mercapto groups and one or more hydroxyl groups, and is more preferably at least one compound selected from among polythiol compounds having two or more mercapto groups.

The polythiol compound is preferably at least one compound selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate), and
more preferably is at least one compound selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, and pentaerythritol tetrakis(3-mercaptopropionate).

### (Episulfide Compound (C))

Examples of the episulfide compound (C) include epithioethylthio compounds, chain aliphatic 2,3-epithiopropylthio compounds, alicyclic 2,3-epithiopropylthio compounds, aromatic 2,3-epithiopropylthio compounds, chain aliphatic 2,3-epithiopropyloxy compounds, alicyclic 2,3-epithiopropyloxy compounds, and aromatic 2,3-epithiopropyloxy compounds. The episulfide compound (C) is used singly, or in mixture of two or more kinds thereof. Examples of these episulfide compounds include the compounds disclosed as examples in WO 2015/137401.

From the viewpoint of improving the solubility of the ultraviolet absorber in a resin, the episulfide compound is preferably at least one species selected from the group consisting of bis(2,3-epithiopropyl)sulfide, bis(2,3-epithiopropyl)disulfide, bis(1,2-epithioethyl)sulfide, bis(1,2-epithioethyl)disulfide, and bis(2,3-epithiopropylthio)methane, and more preferably is bis(2,3-epithiopropyl)disulfide.

In the embodiment, the molar ratio of the active hydrogen group in the active hydrogen compound (B) to the isocyanato group in the isocyanate compound (A) is in a range of from 0.8 to 1.2, preferably in a range of from 0.85 to 1.15, and more preferably in a range of from 0.9 to 1.1. In the above range, a resin suitably used as an optical material, especially a plastic lens material for glasses, can be obtained.

The polymerizable composition for an optical material can be obtained by mixing a resin monomer for an optical material, an additive, and, if necessary, other additives by a conventionally known method.

The temperature at the time of mixing is usually 25°C or lower. From the viewpoint of the pot life of the polymerizable composition for an optical material, it may be preferable to further lower the temperature. However, when the solubility of the additive in the resin monomer for an optical material is not favorable, the additive can be dissolved by heating the resin monomer in advance.

The order of mixing and the method of mixing of the components in the composition are not particularly limited as long as the components can be uniformly mixed without affecting the hue of the polymerizable composition for an optical material, and the mixing can be performed by a known method. Examples of the known method include a method of preparing a masterbatch containing a prescribed amount of an additive, and dispersing and dissolving the masterbatch in a solvent.

### (Step 2)

In this step, from the viewpoint of the effects of the disclosure, the cured product has L^{∗} of 70 or more, preferably L^{∗} of 75 or more, and more preferably L^{∗} of 80 or more in the CIE 1976 (L^{∗}, a^{∗}, b^{∗}) color space when measured at a thickness of 10 mm.

In this step, from the viewpoint of the effects in the disclosure, the cured product has a hue specified by b^{∗} of from -30 to 10, preferably b^{∗} of from -25 to 10, more preferably b^{∗} of from -22 to 7, and still more preferably b^{∗} of from -10 to 5 in the CIE 1976 (L^{∗}, a^{∗}, b^{∗}) color space when measured at a thickness of 10 mm.

The polymerizable composition for an optical material of the embodiment can afford a cured product by polymerization, and can afford cured products having various shapes depending on the shape of the mold. Examples of the polymerization method include a conventionally known method, and conditions thereof are not particularly limited.

In the embodiment, the method of producing a cured product is not particularly limited, but examples of a preferable production method include cast polymerization. First, the polymerizable composition for an optical material is poured between molds held with a gasket, a tape, or the like. At this time, depending on physical properties required for a cured product to be obtained, it is often preferable to perform defoaming treatment under reduced pressure, filtration treatment such as pressurization, decompression, etc., if necessary.

The polymerization conditions are not limited since the conditions vary depending on the type and use amount of the resin monomer for an optical material and the additive, the type and use amount of the catalyst, the shape of the mold, etc., but the polymerization is performed at a temperature of about -50 to 150°C over 1 to 50 hours. In some cases, it is preferable to maintain or gradually raise the temperature in a temperature range of from 10 to 150°C and cure the resin composition in 1 to 25 hours.

The cured product of the embodiment may be subj ected to treatment such as annealing, if necessary. The treatment is usually performed between 50°C and 150°C, but is preferably performed at a temperature from 90 to 140°C, and more preferably from 100 to 130°C.

In the embodiment, a cured product obtained by heat-curing the polymerizable composition for an optical material can be used, for example, as an optical material, and can constitute a part of the optical material. Since the cured product of the embodiment is superior in hue and superior in designability, the cured product can be used as various optical materials by forming the cured product into a desired shape and being provided with a coating layer, other members, etc. formed, if necessary.

### <Second Embodiment>

The method of producing an optical material of the present embodiment comprises the following steps.

Step a: mixing a resin monomer for an optical material and an additive to prepare a polymerizable composition for an optical material having a hue specified by a YI of from -70 to 20.

Step b: polymerizing and curing the polymerizable composition for an optical material to obtain a cured product having a hue specified by a YI of from -70 to 20.

By controlling the hue of the polymerizable composition for an optical material, an optical material having a good hue can be obtained.

In the following, description of configurations and conditions similar to those of the first embodiment will be omitted, if appropriate.

### (Step a)

In this step, a polymerizable composition for an optical material having a hue specified by a YI of from -70 to 20, preferably from -40 to 15, and more preferably from -20 to 10 can be prepared.

By using the polymerizable composition for an optical material having the hue described above, an optical material having a favorable hue can be obtained.

In this step, from the viewpoint of the effect in the disclosure, the polymerizable composition for an optical material has L^{∗} of 70 or more, preferably L^{∗} of 75 or more, and more preferably L^{∗} of 80 or more in the CIE 1976 (L^{∗}, a^{∗}, b^{∗}) color space when measured at a thickness of 10 mm.

In this step, from the viewpoint of the effects in the disclosure, the polymerizable composition for an optical material has a hue specified by b^{∗} of from -30 to 10, preferably b^{∗} of from -30 to 5, more preferably b^{∗} of from -27 to 3, and still more preferably b^{∗} of from -10 to 1 in the CIE 1976 (L^{∗}, a^{∗}, b^{∗}) color space when measured at a thickness of 10 mm.

The step preferably includes a step of mixing a resin monomer for an optical material and an additive to adjust the hue in order to obtain a polymerizable composition for an optical material having the hue described above.

As the resin monomer for an optical material and the additive, those the same as those in the first embodiment can be used, and it is preferable to use an ultraviolet absorber, etc. from the viewpoint of suppressing the coloring of the resin by ultraviolet rays, and further to use a hue adjuster in order to suppress the hue change of the resin due to the addition of an ultraviolet absorber, etc.

The ultraviolet absorber (a) can be used in such an amount that the coloring of the resin is suppressed, and the hue adjuster (b) can be used such that the hue of the resin changed by the addition of the ultraviolet absorber (a) is adjusted to be the hue mentioned above.

The range of the weight ratio (b/a) of the hue adjuster (b) to the ultraviolet absorber (a) contained in the polymerizable composition for an optical material varies depending on the resin that constitutes a lens, the hue adjuster (a) and the ultraviolet absorber (b), and the weight ratio may be adjusted to be from 30 to 50,000, preferably from 70 to 40,000, and more preferably from 100 to 30,000.

In Step a, a polymerizable composition for an optical material can be obtained as in Step 1 of the first embodiment.

### (Step b)

In this step, by polymerizing and curing the polymerizable composition for an optical material, a cured product having a hue specified by a YI of from -70 to 20, preferably from -40 to 15, and more preferably from -20 to 10 can be obtained.

In this step, from the viewpoint of the effects of the disclosure, the cured product has L^{∗} of 70 or more, preferably L^{∗} of 75 or more, and more preferably L^{∗} of 80 or more in the CIE 1976 (L^{∗}, a^{∗}, b^{∗}) color space when measured at a thickness of 10 mm.

In this step, from the viewpoint of the effects in the disclosure, the cured product has a hue specified by b^{∗} of from -30 to 10, preferably b^{∗} of from -25 to 10, more preferably b^{∗} of from -22 to 7, and still more preferably b^{∗} of from -10 to 5 in the CIE 1976 (L^{∗}, a^{∗}, b^{∗}) color space when measured at a thickness of 10 mm.

Regarding items other than those described above, description will be omitted because Step b is the same as Step 2 of the first embodiment.

### < Optical Material >

Examples of the optical material of the embodiment to be obtained by the method described above include a plastic lens, a camera lens, a light emitting diode (LED), a prism, an optical fiber, an information recording substrate, a filter, and a light emitting diode. In particular, the optical material of the embodiment is suitable as an optical material or an optical element such as a plastic lens, a camera lens, or a light emitting diode.

The plastic lens containing the cured product of the embodiment may be used with a coating layer applied on one side or both sides of a lens substrate formed of the cured product, if necessary. Examples of the coating layer include a primer layer, a hard coat layer, an antireflection film layer, an antifogging film layer, an antifouling layer, and a water-repellent layer. Each of these coating layers may be used singly, or a plurality of coating layers may be used in a multilayered manner. When the coating layer is applied to both sides, the same coating layer may be applied to each side, or different coating layers may be applied.

Each of these coating layers may be used in combination with an infrared absorber for the purpose of protecting eyes from infrared rays, a light stabilizer or an antioxidant for the purpose of improving the weather resistance of the lens, a dye or a pigment for the purpose of improving the fashionability of the lens, a photochromic dye or a photochromic pigment, an antistatic agent, and other known additives for improving the performance of the lens. A coat layer such as a hard coat or an antireflection coat, or a primer layer may be provided.

The plastic lens containing the cured product of the embodiment may be used after being dyed using a dye suitable for the purpose, for the purpose of imparting fashionability or photochromic properties. The lens can be dyed by a known dyeing method.

The method of producing an optical material of the embodiment includes, for example, a step of cast polymerizing the polymerizable composition for an optical material of the embodiment.

Although the present disclosure has been explained above based on the embodiment, various configurations can be adopted as long as the effects of the disclosure are not impaired.

### [Examples]

Hereinafter, the present disclosure will be described in more detail with reference to examples, but the disclosure is not limited thereto. The evaluation methods and the materials used in Examples of the disclosure are as follows.

### [Method of Measuring L^{∗}, a^{∗}, b^{∗}]

Using a spectrophotometer (CM-5 manufactured by Minolta Co., Ltd.), the polymerizable composition for an optical material was charged into a cell having a thickness of 10 mm, and L^{∗}, a^{∗}, and b^{∗} in the CIE 1976 (L^{∗}, a^{∗}, b^{∗}) colorimetric system were measured.

### [Method of Measuring YI]

The polymerizable composition for an optical material was charged into a cell having a thickness of 10 mm, and YI was measured with a spectrophotometer CM-5 manufactured by Konica Minolta, Inc.

In Examples, the following ultraviolet absorbers and hue adjusters were used. [Ultraviolet Absorber]
· Viosorb 583 (product name, manufactured by Kyodo Chemical Co., Ltd.): 2-(2-hydroxy -5-tert-octylphenyl)benzotriazole
· TINUVIN 326 (product name, manufactured by BASF): 2-(3-tert-butyl-2-hydroxy-5 -methylphenyl)-5-chloro-2H-benzotriazole
· TINUVIN PS (product name, manufactured by BASF): 2-(2-hydroxy-5 tert-butylphenyl)benzotriazole
· Eversorb 109 (product name, manufactured by Everlight Chemical Industrial Co.): 2-(3-tert-butyl-5-octylpropionate-2-hydroxyphenyl)-5-chloro-2H-benzotriazole

[Hue Adjuster]

In Examples, the following hue adjusters were used.
· Plast Blue 8514 (manufactured by ARIMOTO CHEMICAL Co., Ltd., anthraquinone-based dye)
· Plast Red 8320 (manufactured by ARIMOTO CHEMICAL Co., Ltd., anthraquinone-based dye)
· Solvent Blue 36 (manufactured by ARIMOTO CHEMICAL Co., Ltd., anthraquinone-based dye, 1,4-bis(isopropylamino)anthracene-9,10-dione)
· Solvent Blue 94 (manufactured by ARIMOTO CHEMICAL Co., Ltd., anthraquinone-based dye, 1-amino-2-bromo-4-(phenylamino)anthracene-9,10-dione)

### [Example 1]

A mixed solution was prepared by charging 0.01 parts by mass of dibutyltin(II) dichloride, 0.1 parts by mass of Zelec UN manufactured by Stepan Company, 52 parts by mass of m-xylylenediisocyanate, 1.5 parts by mass of Viosob 583 as an ultraviolet absorber, and 0.00005 parts by mass of Plast Blue 8514. The mixed solution was stirred at 25°C for 1 hour to be completely dissolved. Thereafter, 48 parts by mass of 4-mercaptomethyl-1,8-dimercapto-3,6-dithiaoctane was charged to the prepared solution, and the mixture was stirred at 25°C for 30 minutes to afford a homogeneous solution (a polymerizable composition for an optical material). L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The polymerizable composition for an optical material was defoamed at 600 Pa for 1 hour, filtered through a 1 µm PTFE filter, and then poured into a flat glass mold having a center thickness of 10 mm and a diameter of 78 mm. The glass mold was heated from 25°C to 120°C over 16 hours. The contents was then cooled to room temperature and removed from the glass mold, and thus a flat lens was obtained. The obtained plano lens was further annealed at 120°C for 2 hours. L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

### [Example 2 to 9, Comparative Example 1]

A polymerizable composition for an optical material and a plano lens were prepared in the same manner as in Example 1 except that the addition amount of Plast Blue 8514 as a hue adjuster was changed to the amount shown in Table-1. The evaluation results are shown in Table-1.

### [Example 10]

A mixed solution was prepared by charging 0.01 parts by mass of dibutyltin(II) dichloride, 0.1 parts by mass of Zelec UN manufactured by Stepan Company, 52 parts by mass of m-xylylenediisocyanate, 0.5 parts by mass of Tinuvin 326 as an ultraviolet absorber, 0.0006 parts by mass of Plast Blue 8514, and 0.0003 parts by mass of Plast Red 8320. The mixed solution was stirred at 25°C for 1 hour to be completely dissolved. Thereafter, 48 parts by mass of 4-mercaptomethyl-1,8-dimercapto-3,6-dithiaoctane was charged to the prepared solution, and the mixture was stirred at 25°C for 30 minutes to afford a homogeneous solution (a polymerizable composition for an optical material). L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The polymerizable composition for an optical material was defoamed at 600 Pa for 1 hour, filtered through a 1 µm PTFE filter, and then poured into a flat glass mold having a center thickness of 10 mm and a diameter of 78 mm. The glass mold was heated from 25°C to 120°C over 16 hours. The contents was then cooled to room temperature and removed from the glass mold, and thus a flat lens was obtained. The obtained plano lens was further annealed at 120°C for 2 hours. L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

### [Comparative Example 2]

A polymerizable composition for an optical material and a plano lens were prepared in the same manner as in Example 10 except that Plast Blue 8514 and Plast Red 8320, which are hue adjusters, were not added. The evaluation results are shown in Table-1.

### [Example 11]

A mixed solution was prepared by charging 0.035 parts by mass of dibutyltin(II) dichloride, 0.1 parts by mass of Zelec UN manufactured by Stepan Company, 50.6 parts by mass of a mixture of 2,5-bis(isocyanatomethyl)bicyclo-[2.2.1]-heptane and 2,6-bis(isocyanatomethyl)bicyclo-[2.2.1]-heptane, 1.0 part by mass of Tinuvin 326 as an ultraviolet absorber, 0.0006 parts by mass of Plast Blue 8514, and 0.0003 parts by mass of Plast Red 8320. The mixed solution was stirred at 25°C for 1 hour to be completely dissolved. Thereafter, 25.5 parts by mass of 4-mercaptomethyl-1,8-dimercapto-3,6-dithiaoctane and 23.9 parts by mass of pentaerythritol tetrakis(3-mercaptopropionate) were charged to the prepared solution, and the mixture was stirred at 25°C for 30 minutes to afford a homogeneous solution (a polymerizable composition for an optical material). L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The polymerizable composition for an optical material was defoamed at 600 Pa for 1 hour, filtered through a 1 µm PTFE filter, and then poured into a flat glass mold having a center thickness of 10 mm and a diameter of 78 mm. The glass mold was heated from 25°C to 120°C over 16 hours. The contents was then cooled to room temperature and removed from the glass mold, and thus a flat lens was obtained. The obtained plano lens was further annealed at 120°C for 2 hours. L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

### [Comparative Example 3]

A polymerizable composition for an optical material and a plano lens were prepared in the same manner as in Example 11 except that Plast Blue 8514 and Plast Red 8320, which are hue adjusters, were not added. The evaluation results are shown in Table-1.

### [Example 12]

A mixed solution was prepared by charging 0.035 parts by mass of dibutyltin(II) dichloride, 0.1 parts by mass of Zelec UN manufactured by Stepan Company, 50.6 parts by mass of a mixture of 2,5-bis(isocyanatomethyl)bicyclo-[2.2.1]-heptane and 2,6-bis(isocyanatomethyl)bicyclo-[2.2.1]-heptane, 1.5 parts by mass of Viosob 583 as an ultraviolet absorber, and 0.00005 parts by mass of Plast Blue 8514. The mixed solution was stirred at 25°C for 1 hour to be completely dissolved. Thereafter, 25.5 parts by mass of 4-mercaptomethyl-1,8-dimercapto-3,6-dithiaoctane and 23.9 parts by mass of pentaerythritol tetrakis(3-mercaptopropionate) were charged to the prepared solution, and the mixture was stirred at 25°C for 30 minutes to afford a homogeneous solution (a polymerizable composition for an optical material). L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The polymerizable composition for an optical material was defoamed at 600 Pa for 1 hour, filtered through a 1 µm PTFE filter, and then poured into a flat glass mold having a center thickness of 10 mm and a diameter of 78 mm. The glass mold was heated from 25°C to 120°C over 16 hours. The contents was then cooled to room temperature and removed from the glass mold, and thus a flat lens was obtained. The obtained plano lens was further annealed at 120°C for 2 hours. L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

### [Examples 13 to 15]

A polymerizable composition for an optical material and a plano lens were prepared in the same manner as in Example 12 except that the addition amount of Plast Blue 8514 as a hue adjuster was changed to the amount shown in Table-1.

The evaluation results are shown in Table-1.

### [Example 16]

A mixed solution was prepared by charging 0.035 parts by mass of dibutyltin(II) dichloride, 0.1 parts by mass of Zelec UN manufactured by Stepan Company, 50.6 parts by mass of a mixture of 2,5-bis(isocyanatomethyl)bicyclo-[2.2.1]-heptane and 2,6-bis(isocyanatomethyl)bicyclo-[2.2.1]-heptane, 2.0 parts by mass of Eversorb 109 as an ultraviolet absorber, 0.0006 parts by mass of Plast Blue 8514, and 0.0003 parts by mass of Plast Red 8320. The mixed solution was stirred at 25°C for 1 hour to be completely dissolved. Thereafter, 25.5 parts by mass of 4-mercaptomethyl-1,8-dimercapto-3,6-dithiaoctane and 23.9 parts by mass of pentaerythritol tetrakis(3-mercaptopropionate) were charged to the prepared solution, and the mixture was stirred at 25°C for 30 minutes to afford a homogeneous solution (a polymerizable composition for an optical material). L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The polymerizable composition for an optical material was defoamed at 600 Pa for 1 hour, filtered through a 1 µm PTFE filter, and then poured into a flat glass mold having a center thickness of 10 mm and a diameter of 78 mm. The glass mold was heated from 25°C to 120°C over 16 hours. The contents was then cooled to room temperature and removed from the glass mold, and thus a flat lens was obtained. The obtained plano lens was further annealed at 120°C for 2 hours. L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

### [Example 17]

A mixed solution was prepared by charging 0.035 parts by mass of dibutyltin(II) dichloride, 0.1 parts by mass of Zelec UN manufactured by Stepan Company, 50.6 parts by mass of a mixture of 2,5-bis(isocyanatomethyl)bicyclo-[2.2.1]-heptane and 2,6-bis(isocyanatomethyl)bicyclo-[2.2.1]-heptane, 1.5 parts by mass of Tinuvin PS as an ultraviolet absorber, and 0.00005 parts by mass of Plast Blue 8514. The mixed solution was stirred at 25°C for 1 hour to be completely dissolved. Thereafter, 25.5 parts by mass of 4-mercaptomethyl-1,8-dimercapto-3,6-dithiaoctane and 23.9 parts by mass of pentaerythritol tetrakis(3-mercaptopropionate) were charged to the prepared solution, and the mixture was stirred at 25°C for 30 minutes to afford a homogeneous solution (a polymerizable composition for an optical material). L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The polymerizable composition for an optical material was defoamed at 600 Pa for 1 hour, filtered through a 1 µm PTFE filter, and then poured into a flat glass mold having a center thickness of 10 mm and a diameter of 78 mm. The glass mold was heated from 25°C to 120°C over 16 hours. The contents was then cooled to room temperature and removed from the glass mold, and thus a flat lens was obtained. The obtained plano lens was further annealed at 120°C for 2 hours. L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

### [Examples 18 and 19]

A homogeneous solution (a polymerizable composition for an optical material) and a flat lens were obtained in the same manner as in Example 10 except that the type and amount of the ultraviolet absorber and the type and amount of the hue adjuster were changed as shown in Table 1. For the polymerizable composition for an optical material and the flat lens, L^{∗}, a^{∗}, b^{∗} and a YI value in the CIE 1976 (L^{∗}, a^{∗}, b^{∗}) colorimetric system were measured in accordance with the method described above.

The evaluation results are shown in Table-1.

### [Examples 20 and 21]

A homogeneous solution (a polymerizable composition for an optical material) and a flat lens were obtained in the same manner as in Example 11 except that the type and amount of the ultraviolet absorber and the type and amount of the hue adjuster were changed as shown in Table 1. For the polymerizable composition for an optical material and the flat lens, L^{∗}, a^{∗}, b^{∗} and a YI value in the CIE 1976 (L^{∗}, a^{∗}, b^{∗}) colorimetric system were measured in accordance with the method described above.

The evaluation results are shown in Table-1.

### [Examples 22 and 23]

A homogeneous solution (a polymerizable composition for an optical material) was obtained by charging 90.9 parts by mass of bis(2,3-epithiopropyl)disulfide, 0.02 parts by mass of N,N-dimethylcyclohexylamine, 0.1 parts by mass of N,N-dicyclohexylmethylamine, 9.1 parts by mass of a mixture of 4,8-dimercaptomethyl-1,11-dimercapto-3,6,9-trithiaundecane, 4,7-dimercaptomethyl-1, 11-dimercapto-3,6,9-trithiaundecane, and 5,7-dimercaptomethyl-1,11-dimercapto-3,6,9-trithiaundecane, the ultraviolet absorber shown in Table 1 in the amount shown in Table 1, and the hue adjuster shown in Table 1 in the amount shown in Table 1, and then stirring the mixture at 20°C for 15 minutes. L^{∗}, a^{∗}, b^{∗} and a YI value in the CIE 1976 (L^{∗}, a^{∗}, b^{∗}) colorimetric system of the polymerizable composition for an optical material were measured in accordance with the method described above.

The solution was defoamed at 400 Pa for 1 hour, filtered through a 1 µm PTFE filter, and then poured into a flat glass mold having a center thickness of 10 mm and a diameter of 78 mm. The glass mold was heated from 25°C to 120°C over 20 hours. The contents was then cooled to room temperature and removed from the glass mold, and thus a flat lens was obtained. The obtained flat lens was further annealed at 120°C for 2 hours.

L^{∗}, a^{∗}, b^{∗} and a YI value of the flat lens in the CIE 1976 (L^{∗}, a^{∗}, b^{∗}) colorimetric system were measured in accordance with the method described above.

The evaluation results are shown in Table-1.

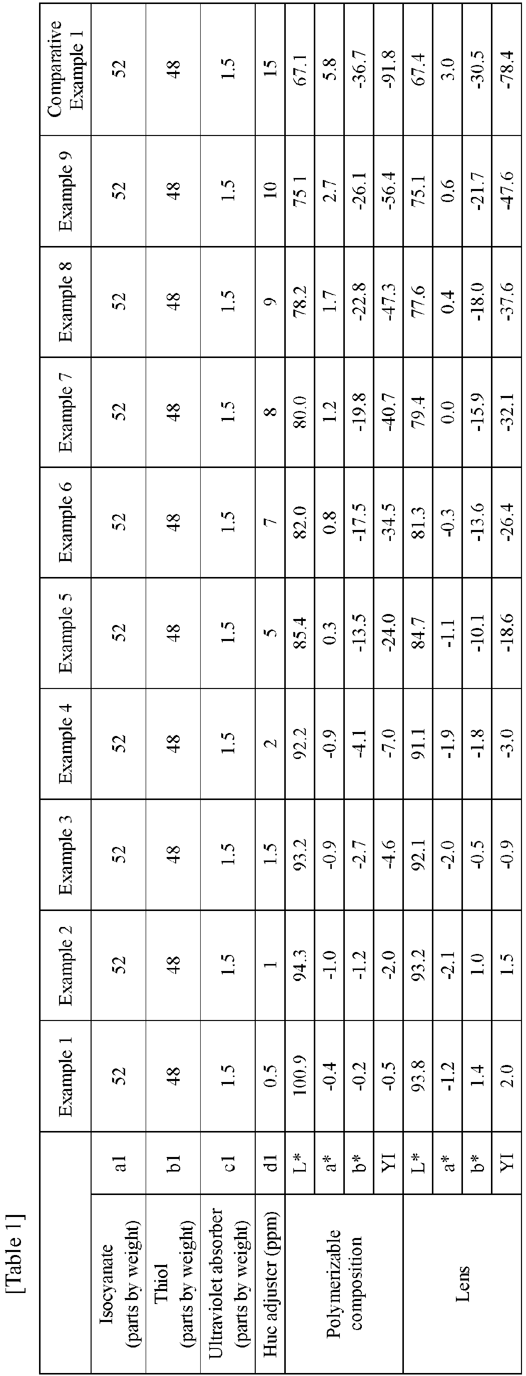

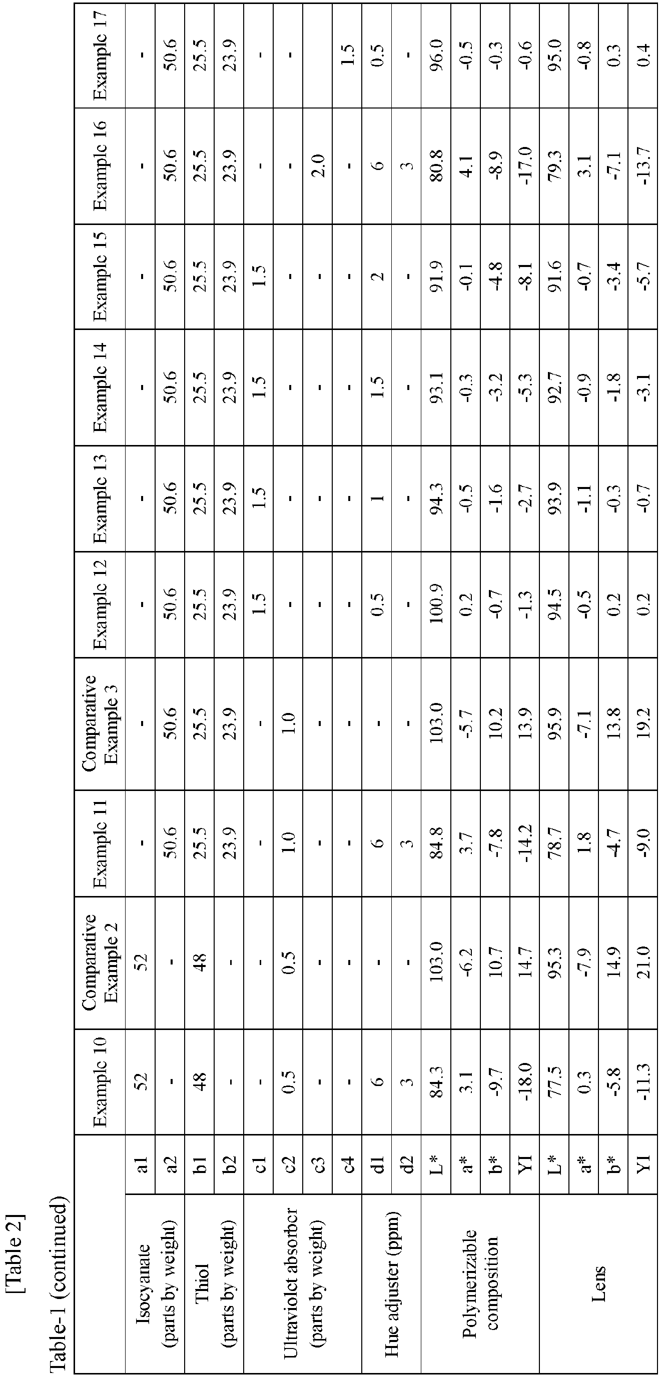

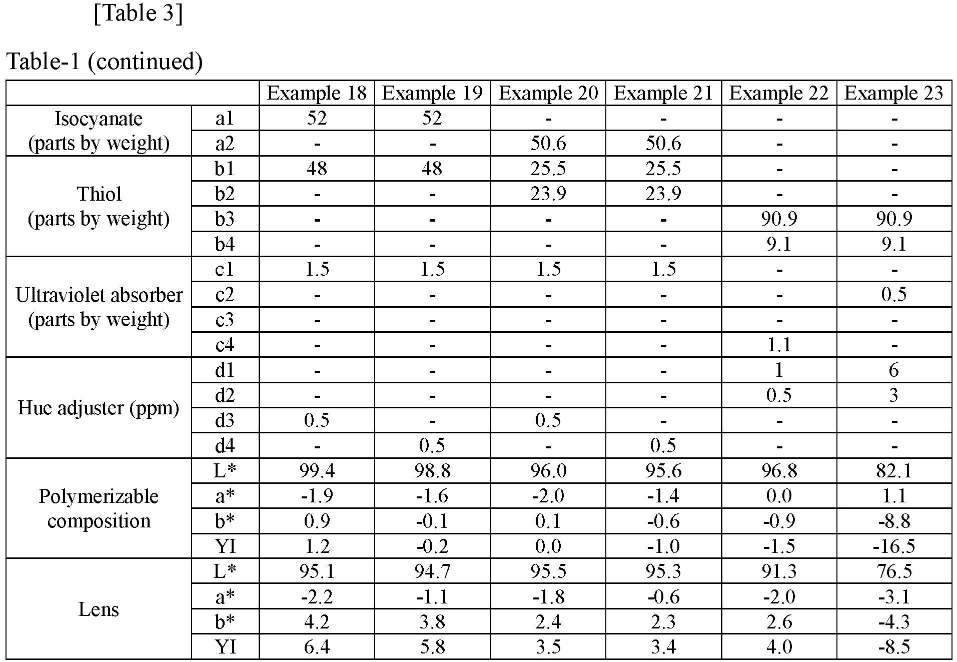

The compounds listed in Table-1 are as follows.
a1: m-xylylene diisocyanate
a2: a mixture of 2,5-bis(isocyanatomethyl)bicyclo-[2.2.1]-heptane and 2,6-bis(isocyanatomethyl)bicyclo-[2.2.1]-heptane
b1: 4-mercaptomethyl-1,8-dimercapto-3,6-dithiaoctane
b2: pentaerythritol tetrakis(3-mercaptopropionate)
b3: bis(2,3-epithiopropyl)disulfide (also referred to as ETDS)
b4: a mixture of 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto -3,6,9-trithiaundecane (also referred to as FSH)
c1: Viosob583
c2: Tinuvin326
c3: Eversorb109
c4: TinuvinPS
d1: PlastBlue8514
d2: PlastRed8320
d3: Solvent Blue 36
d4: Solvent Blue 94

The results of Examples clearly revealed that an optical material having a favorable hue can be obtained by using a polymerizable composition for an optical material having a desired hue.

The disclosure of Japanese Patent Application No. 2019-066203 filed on March 29, 2019 is incorporated herein by reference in its entirety.

All publications, patent applications, and technical standards described in the present description are incorporated herein by reference to the same extent as if each publication, patent application, or technical standard was specifically and individually indicated to be incorporated by reference.

## Claims

1. A method of producing an optical material, the method comprising:
mixing a resin monomer for an optical material with an additive to prepare a polymerizable composition for an optical material having a hue for which L^{∗} is 70 or more and b^{∗} is from -30 to 10 in a CIE 1976 (L^{∗}, a^{∗}, b^{∗}) color space in a case in which the polymerizable composition for an optical material is measured at a thickness of 10 mm; and
polymerizing and curing the polymerizable composition for an optical material to obtain a cured product having a hue for which L^{∗} is 70 or more and b^{∗} is from -30 to 10 in the CIE 1976 (L^{∗}, a^{∗}, b^{∗}) color space in a case in which the cured product is measured at a thickness of 10 mm.

2. A method of producing an optical material, the method comprising:
mixing a resin monomer for an optical material with an additive to prepare a polymerizable composition for an optical material having a hue for which YI is from -70 to 20; and
polymerizing and curing the polymerizable composition for an optical material to obtain a cured product having a hue for which YI is from -70 to 20.

3. The method of producing an optical material according to claim 2, wherein the polymerizable composition for an optical material has a hue for which L^{∗} is 70 or more and b^{∗} is from -30 to 10 in a CIE 1976 (L^{∗}, a^{∗}, b^{∗}) color space in a case in which the polymerizable composition for an optical material is measured at a thickness of 10 mm, and
the cured product has a hue for which L^{∗} is 70 or more and b^{∗} is from -30 to 10 in the CIE 1976 (L^{∗}, a^{∗}, b^{∗}) color space in a case in which the cured product is measured at a thickness of 10 mm.

4. The method of producing an optical material according to any one of claims 1 to 3, wherein:
the additive includes an ultraviolet absorber and a hue adjuster, and
the preparing the polymerizable composition for an optical material comprises adjusting a hue of the polymerizable composition for an optical material with the hue adjuster.

5. The method of producing an optical material according to claim 4, wherein the ultraviolet absorber comprises a benzotriazole compound represented by the following Formula (1): 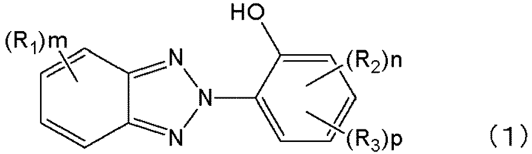 wherein, in Formula (1), each R₁ and each R₂ independently represents an alkyl group having 1 to 8 carbon atoms or a halogen atom, m represents an integer from 0 to 3, n represents an integer from 0 to 3, p represents an integer from 0 to 1, and each R₃ independently represents a functional group having 2 to 15 carbon atoms including an ester bond.

6. The method of producing an optical material according to claim 5, wherein the benzotriazole compound is at least one selected from the group consisting of 2-(3-tert-butyl-2-hydroxy-5-methylphenyl)-5-chloro-2H-benzotriazole, 2-(2-hydroxy-5-tert-octylphenyl)benzotriazole, 2-(2-hydroxy-5-tert-butylphenyl)benzotriazole, 2-(5-octylpropionate-2-hydroxyphenyl)-5-chloro-2H-benzotriazole, 2-(3-tert-butyl-5-octylpropionate-2-hydroxyphenyl)-5chloro-2H-benzotriazole, 2-(3-tert-butyl-2-hydroxy-5-ethylphenyl)-5-chloro-2H-benzotriazole, 2-(4-ethoxy-2-hydroxyphenyl)-5-chloro-2H-benzotriazole, and 2-(4-butoxy-2-hydroxyphenyl)-5-chloro-2H-benzotriazole.

7. The method of producing an optical material according to any one of claims 4 to 6, wherein the hue adjuster is a bluing agent.

8. The method of producing an optical material according to any one of claims 1 to 7, wherein the resin monomer for an optical material comprises at least one selected from the group consisting of:
a combination of an isocyanate compound (A) and at least one active hydrogen compound (B) selected from the group consisting of polythiol compounds having two or more mercapto groups, hydroxythiol compounds having one or more mercapto groups and one or more hydroxyl groups, polyol compounds having two or more hydroxyl groups, and amine compounds,
an episulfide compound (C), and
a combination of an episulfide compound (C) and a polythiol compound.

9. The method of producing an optical material according to claim 8, wherein the isocyanate compound (A) comprises at least one selected from the group consisting of an aliphatic isocyanate compound, an alicyclic isocyanate compound, an aromatic isocyanate compound, a heterocyclic isocyanate compound, and an araliphatic isocyanate compound.

10. The method of producing an optical material according to claim 9, wherein the isocyanate compound (A) comprises at least one selected from the group consisting of xylylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, bis(isocyanatocyclohexyl)methane, hexamethylene diisocyanate, pentamethylene diisocyanate, and isophorone isocyanate.

11. The method of producing an optical material according to claim 8, wherein the polythiol compound comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

12. The method of producing an optical material according to claim 8, wherein the episulfide compound (C) is at least one selected from the group consisting of bis(2,3-epithiopropyl)sulfide, bis(2,3-epithiopropyl)disulfide, bis(1,2-epithioethyl)sulfide, bis(1,2-epithioethyl)disulfide, and bis(2,3-epithiopropylthio)methane.

13. The method of producing an optical material according to any one of claims 1 to 12, wherein the polymerizable composition for an optical material has a hue for which L^{∗} is 70 or more and b^{∗} is from -30 to 5 in the CIE 1976 (L^{∗}, a^{∗}, b^{∗}) color space in a case in which the polymerizable composition for an optical material is measured at a thickness of 10 mm.

14. The method of producing an optical material according to any one of claims 1 to 13, wherein the cured product has a hue for which L^{∗} is 70 or more and b^{∗} is from -25 to10 in the CIE 1976 (L^{∗}, a^{∗}, b^{∗}) color space in a case in which the cured product is measured at a thickness of 10 mm.

15. A polymerizable composition for an optical material, comprising a resin monomer for an optical material and an additive, wherein the polymerizable composition has a hue for which L^{∗} is 70 or more and b^{∗} is from -30 to 10 in a CIE 1976 (L^{∗}, a^{∗}, b^{∗}) color space.

16. A polymerizable composition for an optical material, comprising a resin monomer for an optical material and an additive, wherein, in the polymerizable composition, a value of YI is from -70 to 20.

17. The polymerizable composition for an optical material according to claim 16, wherein L^{∗} is 70 or more and b^{∗} is from -30 to 10 in a CIE 1976 (L^{∗}, a^{∗}, b^{∗}) color space.

18. The polymerizable composition for an optical material according to any one of claims 15 to 17, wherein the additive comprises an ultraviolet absorber and a hue adjuster.

19. The polymerizable composition for an optical material according to claim 18, wherein the ultraviolet absorber comprises a benzotriazole compound represented by the following Formula (1): 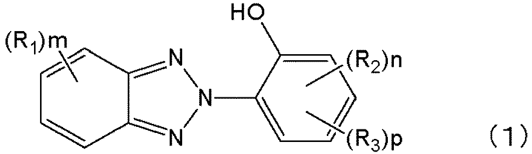 wherein, in Formula (1), each R₁ and each R₂ independently represents an alkyl group having 1 to 8 carbon atoms or a halogen atom, m represents an integer from 0 to 3, n represents an integer from 0 to 3, p represents an integer from 0 to 1, and each R₃ independently represents a functional group having 2 to 15 carbon atoms including an ester bond.

20. The polymerizable composition for an optical material according to claim 19, wherein the benzotriazole compound is at least one selected from the group consisting of 2-(3-tert-butyl-2 hydroxy-5-methylphenyl)-5-chloro-2H-benzotriazole, 2-(2-hydroxy-5-tert-octylphenyl)benzotriazole, 2-(2-hydroxy-5-tert-butylphenyl)benzotriazole, 2-(5-octylpropionate-2-hydroxyphenyl)-5-chloro-2H-benzotriazole, 2-(3-tert-butyl-5-octylpropionate-2-hydroxyphenyl)-5-chloro-2H-benzotriazole, 2-(3-tert-butyl-2-hydroxy-5-ethylphenyl)-5-chloro-2H-benzotriazole, 2-(4-ethoxy-2-hydroxyphenyl)-5-chloro-2H-benzotriazole, and 2-(4-butoxy-2-hydroxyphenyl)-5-chloro-2H-benzotriazole.

21. The polymerizable composition for an optical material according to any one of claims 18 to 20, wherein the hue adjuster is a bluing agent.

22. The polymerizable composition for an optical material according to any one of claims 15 to 21, wherein the resin monomer for an optical material comprises:
an isocyanate compound (A); and
at least one active hydrogen compound (B) selected from the group consisting of polythiol compounds having two or more mercapto groups, hydroxythiol compounds having one or more mercapto groups and one or more hydroxyl groups, polyol compounds having two or more hydroxyl groups, and amine compounds.

23. The polymerizable composition for an optical material according to claim 22, wherein the isocyanate compound (A) comprises at least one selected from the group consisting of an aliphatic isocyanate compound, an alicyclic isocyanate compound, an aromatic isocyanate compound, a heterocyclic isocyanate compound, and an araliphatic isocyanate compound.

24. The polymerizable composition for an optical material according to claim 22 or 23, wherein the isocyanate compound (A) comprises at least one selected from the group consisting of xylylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, bis(isocyanatocyclohexyl)methane, hexamethylene diisocyanate, pentamethylene diisocyanate, and isophorone isocyanate.

25. The polymerizable composition for an optical material according to claim 22, wherein the polythiol compound comprises at least one selected from the group consisting of 5,7-dimercaptomethyl-1, 11-dimercapto-3,6,9-trithiaundecane, 4,7-dimercaptomethyl-1, 11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

26. The polymerizable composition for an optical material according to any one of claims 15 to 25, wherein the polymerizable composition has a hue for which L^{∗} is 70 or more and b^{∗} is from -30 to 5 in the CIE 1976 (L^{∗}, a^{∗}, b^{∗}) color space in a case in which the polymerizable composition for an optical material is measured at a thickness of 10 mm.
